# FASCICULE DE BREVET EUROPEEN

(11) **EP 0 870 535 B1**
(45) Date de publication et mention de la délivrance du brevet: **25.02.2004**
(21) Numéro de dépôt: 98400729.4
(22) Date de dépôt: 27.03.1998
(51) Int. Cl.: B01F 5/10, G05D 11/13

(54) **Procédé et appareil de dilution de produits chimiques ultra-purs destiné à l'industrie micro-électronique**
Verfahren und Vorrichtung zum Verdünnen ultrareiner chemischer Produkte zur Verwendung in der mikroelektronischen Industrie
Method and device for diluting ultra-pure chemical products for use in the microelectronic industry

(30) Priorité: 11.04.1997 FR 9704500
(43) Date de publication de la demande: 14.10.1998
(73) Titulaire: Air Liquide Electronics Systems, 75007 Paris (FR)
(72) Inventeur: Laederich, Thierry, 38800 Le Pont De Claix (FR); Guarneri, Georges, 38800 Le Pont De Claix (FR); Dulphy, Hervé, 38800 Le Pont De Claix (FR)
(74) Mandataire: Vesin, Jacques

(56) Documents cités:
- EP-A- 0 716 879
- WO-A-96/39651
- PATENT ABSTRACTS OF JAPAN vol. 18, no. 290 (E-1557), 2 juin 1994 & JP 06 061136 A (MITSUBISHI GAS CHEM CO INC), 4 mars 1994,

## Description

La présente invention concerne un procédé et un appareil de dilution de produits chimiques ultra-purs destinés à être utilisés dans l'industrie micro-électronique. Elle se rapporte plus particulièrement à la dilution de produits concentrés ultra-purs afin d'obtenir la pureté désirée à leur point d'utilisation lors de différentes étapes de fabrication des semi-conducteurs.

La contamination dans les procédés de fabrication de circuits intégrés est en général un soucis très important pour ceux qui participent à la mise au point d'un procédé de fabrication de ces semi-conducteurs. Dans les procédés modernes de fabrication des semi-conducteurs, un grand nombre d'étapes est constitué par des étapes de nettoyage de différentes sortes. Ces étapes de nettoyage peuvent consister à enlever des contaminants organiques, des contaminants métalliques, des « photoresists » utilisés lors de la gravure ou des résidus inorganiques de ces produits, des résidus de gravure des circuits, des oxydes naissants, par exemple du type SiO2, etc... De nos jours, le coût de construction et de réalisation d'une usine de fabrication de semi-conducteurs est typiquement de l'ordre de 1 milliard de dollars et une large fraction de ce coût concerne les différentes mesures qui sont prises pour le contrôle des particules, le nettoyage et le contrôle de la contamination lors des différentes étapes de fabrication des semi-conducteurs.

Une source importante de contamination est constituée par les impuretés des procédés chimiques. Etant donné que les nettoyage sont fréquents et critiques, la contamination due à la chimie du nettoyage doit être soigneusement évitée.

Un grand nombre de produits chimiques différents sont utilisés dans la fabrication des semi-conducteurs tels que l'ammoniaque, l'acide chlorhydrique, l'acide fluorhydrique, le silane, etc... Par exemple, l'ammoniaque sous forme d'hydroxyde d'ammonium est largement utilisée dans les différentes étapes de nettoyage du procédé de nettoyage standard dénommé procédé « RCA ». Ce procédé comporte différentes étapes et notamment : tout d'abord, un nettoyage aux solvants pour enlever la plus grande partie des matières organiques, à l'aide de tetrachloroéthylène ou un solvant de ce type, suivi d'un nettoyage de base avec une solution de peroxyde d'hydrogène, d'hydroxyde d'ammonium et d'eau ultrapure dans des proportions volumiques typiquement de l'ordre respectivement de 1-1-5 ou de 1-2-7 et enfin un nettoyage acide à l'aide d'une solution de peroxyde d'hydrogène et d'acide chlorhydrique dans de l'eau ultrapure dans des proportions volumiques respectives typiquement de 1-1-6 ou de 1-2-8.

Pour plus de détails sur ces différentes étapes de nettoyage, on se référera par exemple à l'ouvrage de W. RUNYAN et K. BEAN, intitulé « Semi-conductors integrated circuit proccessing technology » (1990).

Ces différents produits chimiques sont souvent délivrés en « vrac » aux portes de l'usine sous forme de produits ayant une concentration élevée et une pureté souvent industrielle, c'est-à-dire non adaptée à la pureté nécessaire pour la micro-électronique, lesdits produits sous forme concentrée ou diluée étant épurés de manière à obtenir des produits ultra-purs correspondants aux standards de la micro-électronique.

Il est connu du brevet US 5,522,660 un appareil pour le mélange et le contrôle de la concentration d'un produit chimique concentré dans un diluent, qui présente l'inconvénient notamment d'utiliser plusieurs mesures de la concentration du produit dilué, compte tenu du manque d'homogénéité de la solution délivrée. Par ailleurs, WO 96/3968 decrit un procédé et un système pour le mélange de produits chimiques ultrapurs.

La présente invention concerne la réalisation à partir de produits concentrés ayant déjà une pureté « électronique », c'est-à-dire étant déjà sous une forme ultra-pure permettant d'être utilisée dans l'industrie micro-électronique, et que l'on désire diluer à l'exacte concentration ou titre voulu de manière à pouvoir l'utiliser dans les conditions souhaitées au point d'utilisation dans le procédé de fabrication des semi-conducteurs.

Selon le procédé de l'invention, on utilise un premier récipient contenant ledit produit chimique sous forme concentrée ayant une pureté prédéterminée P compatible avec la pureté requise dans l'industrie micro-électronique, au point d'utilisation de ce produit, une source d'eau ultra-pure de pureté au moins égale à P, un second récipient pour mélanger le produit chimique concentré et l'eau ultra-pure permettant d'obtenir une solution de produit dilué dont la pureté est au moins égale à P, l'ajustement du titre de la solution de produit dilué étant assuré par la mesure du titre de la solution diluée après le mélange d'une quantité prédéterminée d'eau ultra-pure et de produits chimiques concentrés de pureté P, de manière à obtenir une concentration du produit chimique supérieure à la concentration finale voulue du produit chimique dilué, puis par addition d'une quantité supplémentaire d'eau ultra-pure au mélange, cette quantité supplémentaire étant au plus égale à la quantité théorique nécessaire pour obtenir le titre voulu, puis par brassage de la solution diluée pendant une durée telle que l'on obtienne au moins environ 3 recirculations du produit dilué sur lui-même de manière à assurer une bonne homogénéisation du produit dilué et un titre sensiblement constant dans tout le volume du produit dilué, le titre de la solution du produit dilué étant finalement contrôlé avant que le produit ne soit stocké dans un troisième récipient ou envoyé directement au point d'utilisation.

De préférence, le procédé selon l'invention est caractérisé en ce que le titre de la solution diluée est ajusté par ajouts d'eau ultra-pure ou de produits chimiques concentrés si celui-ci n'est pas dans la tolérance désirée après l'opération de brassage, un brassage de durée similaire (généralement égale ou supérieure) au premier brassage étant à nouveau réalisé.

Selon un mode préférentiel de réalisation, le procédé selon l'invention est caractérisé en ce que, avant transfert au troisième récipient, un échantillon de produit dilué est prélevé pour analyse de la pureté dudit produit dilué de manière à pouvoir donner au client utilisateur la composition précise du produit dilué, obtenue par analyse.

De préférence, le brassage de la solution diluée sera réalisé pendant une durée telle que l'on obtienne au plus environ 200 recirculations du produit dilué, de préférence entre 10 et 50 recirculations dudit produit dilué, de manière très préférentielle pendant une durée correspondant à entre 10 et 20 recirculations du produit.

Selon un mode de réalisation de l'invention, celle-ci est caractérisée en ce que la dilution du produit concentré s'effectue dans une cuve fermée, brassée à l'aide d'un éjecteur.

De préférence, le dosage de la quantité d'eau ultra-pure voulue est effectué par pesée ou tout autre méthode volumétrique.

La mesure du titre de la solution de produit dilué sera de préférence effectuée par mesure de la densité d'un échantillon du mélange, cet échantillon circulant dans une canalisation à circuit fermé sur le récipient où se trouve le produit dilué, cette mesure s'effectuant sans contact physique direct avec l'échantillon. Ainsi tout risque de contamination du fait de la mesure est évité. Les différentes méthodes, bien connues en soi, permettant d'effectuer cette mesure sans contact physique avec l'échantillon, sont par exemple la conductimétrie (méthode dans laquelle on crée un champ électrique ou magnétique entre deux électrodes placées à l'extérieur d'un tube contenant le liquide et on mesure la résistance) la mesure par ultra-son, la mesure de densité, etc...

De préférence également, la mesure du titre sera effectuée par mesure de la densité du produit dilué à l'aide d'un densitomètre préalablement calibré avec de l'eau désionisée de pureté supérieure à P et de densité égale à 1, avant chaque opération de dilution du produit concentré.

Selon un autre mode de réalisation de l'invention, la mesure de densité est effectuée à l'aide d'un densitomètre auquel on fournit un échantillon qui est ensuite jeté de manière à éviter toute pollution du produit dilué.

Le procédé selon l'invention permet d'obtenir une précision sur le titre ou la concentration de la solution diluée de l'ordre de ou supérieur à 10⁻⁴ ou 0,01%, comme cela est maintenant exigé pour les dilutions de produits de développement des résines photosensibles dites « photorésists » ou encore pour l'acide fluorhydrique dilué. Les appareils de dilution de l'art antérieur ne permettent pas d'atteindre une précision dans cette dilution supérieure à celle sur le titre du produit chimique dilué et les méthodes habituellement utilisées par volumétrie ou gravimétrie ne permettent pas d'espérer des précisions supérieures à 5 10⁻³ ou 0,5%.

L'invention concerne également un appareil de dilution de produits chimiques ultrapurs qui comporte un premier récipient contenant ledit produit chimique sous forme concentrée et ayant une pureté P, une source d'eau ultrapure de pureté au moins égale à P, un second récipient pour mélanger le produit chimique concentré et l'eau ultra-pure et des moyens d'ajustement du titre de la résolution de produit dilué pour mettre en oeuvre le procédé.

L'invention sera mieux comprise à l'aide des exemples de réalisation suivants, donnés à titre non limitatif conjointement avec les figures qui représentent :
la figure 1, un exemple de réalisation d'un procédé et appareil de dilution selon l'invention;
la figure 2, un organigramme schématisant le remplissage de la cuve de dilution de produit;
la figure 3, un organigramme schématisant le procédé de dilution du produit pur.

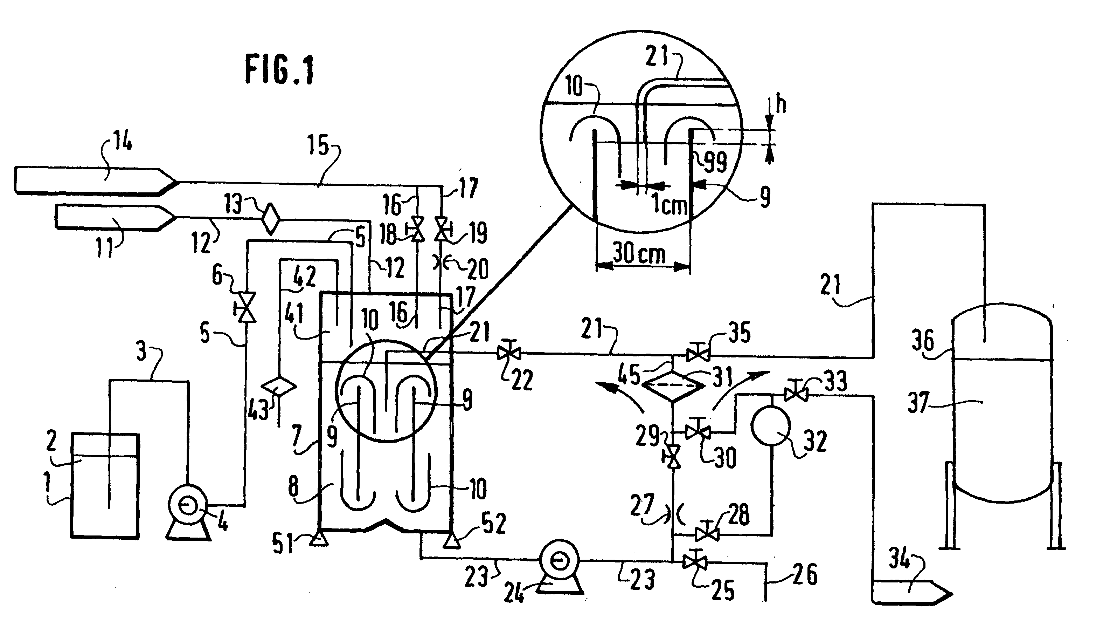

Sur la figure 1, un fût (1) de produit chimique ultra-pur à diluer (2) est relié par une canalisation (3) à une pompe doseuse (4) de produit chimique ou une capacité de dosage de produit à diluer qui permet d'envoyer le produit pur via la canalisation (5) et la vanne (6) dans une cuve de mélange (7) contenant le liquide dilué (8). Cette cuve (7) est munie d'un éjecteur (9) permettant un brassage efficace et une recirculation du produit (8) sur lui-même dans cette cuve (7) selon les flêches (10) sur la figure. La cuve (7) est maintenue en légère surpression d'air ou d'azote (41) de haute pureté (ayant notamment un niveau d'impuretés métalliques inférieur à 10 ppt pour chaque métal) afin d'éviter toute contamination du liquide dilué (8). Cette cuve (7) comporte également un conduit (42) qui relie l'espace gazeux (41) au dessus du liquide (8) dans la cuve (7) via un filtre évent (43) à l'atmosphère. Ce filtre permet de maintenir une pression sensiblement constante au dessus du liquide (8) : lorsqu'une dépression s'installe, l'air est filtré et aspiré à travers (43) et permet de rétablir la pression. Cette cuve (7) est également reliée à une source (11) d'air ou d'azote ultra-pur comme décrit précédemment via la canalisation (12) et le filtre (13), ainsi qu'à une source d'eau ultra-pure (14) permettant de diluer le produit chimique ultra-pur (2) venant du fût (1). A l'extrémité de la canalisation (15) reliant la réserve d'eau ultra-pure (14) à la cuve (7) sont disposées en parallèle une canalisation (16) et une vanne permettant d'injecter un débit important d'eau ultra-pure dans la cuve (7) et une canalisation (17) et une vanne (19) associée à un orifice calibré (20) permettant un faible débit d'eau ultrapure.

Le produit dilué peut être prélevé via la canalisation (21) et les vannes (22) et (35) pour être stocké dans le réservoir (36) de produit dilué (37).

A la base de la cuve (7) se trouve une canalisation (23) qui à l'aide de la pompe (24) et de la vanne (25) permet de purger ladite cuve (7) via la canalisation de purge (26).

Le produit dilué (8) peut être prélevé pour analyse (lorsque (22) est ouverte et (35) est fermée) via la canalisation (45), le filtre (31), les vannes (30), (29), et (28) qui permettent un prélèvement de liquide pour la mesure de la concentration dans le dispositif (32) de préférence par mesure de densité, ou par conductimètrie ou par ultra-son, mais dans tous les cas, sans contact direct avec le produit liquide. L'orifice calibré (27) permet de répartir le liquide dans les deux branches (28 et 29). La vanne (33) permet la purge du circuit via l'évacuation (34).

Sur la figure 1, est représenté en bas à gauche un agrandissement de l'éjecteur constitué d'un tube 21, par exemple de diamètre 1 cm qui pénètre d'une hauteur h sous le niveau supérieur du tube extérieur (99) de l'éjecteur (9) dont le diamètre est par exemple de 30cm. La hauteur h est de préférence de l'ordre de quelques millimètres.

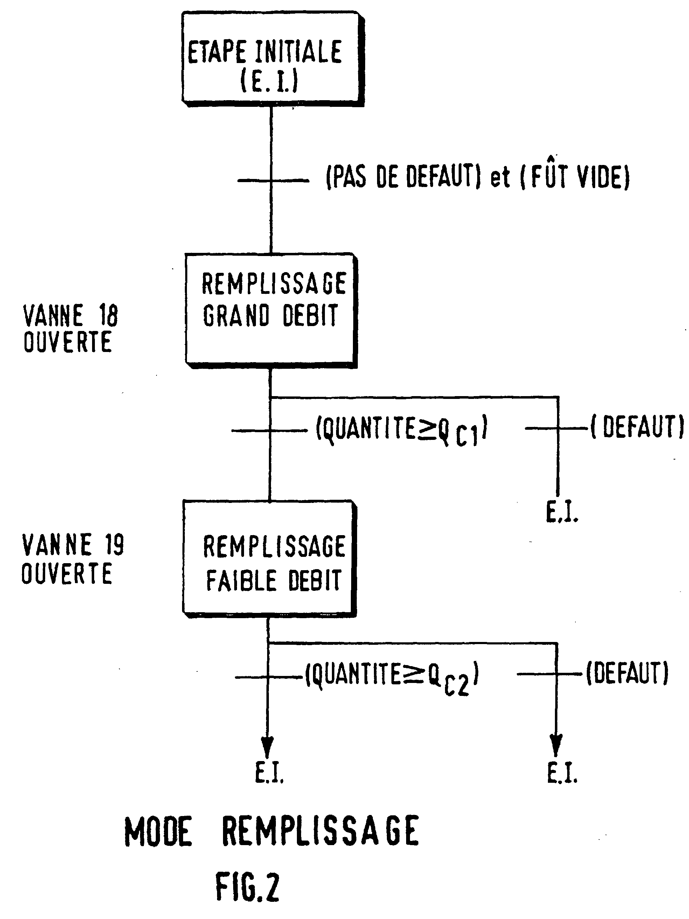

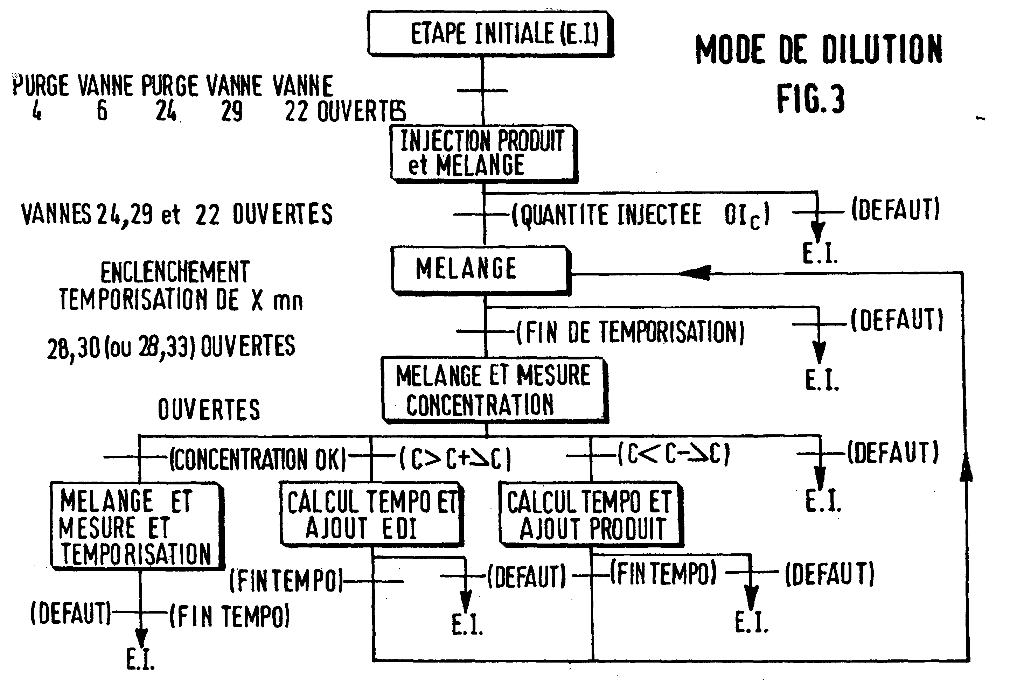

les figures 2 et 3 représentent des diagrammes. expliquant respectivement le fonctionnement lors du remplissage du récipient (7) (mode remplissage - figure 2) ainsi que lors du fonctionnement en mode de dilution de l'appareil. (mode dilution - figure 3).

Le fonctionnement du système de la figure 1 va maintenant être expliqué à l'aide des figures 2 et 3.

### 1) Mode remplissage :

On procède tout d'abord au remplissage de la cuve (7) en eau désionisée ultra-pure. La fin du remplissage peut être commandée par un compteur volumétrique asservissant une vanne ou par pesée ou par mesure de niveau ou tout autre moyen adéquat permettant de délivrer une quantité précise d'eau dans ce réservoir (7). On procède au remplissage à grand débit avec la vanne (18) ouverte que l'on ferme ensuite pour ouvrir la vanne (19) et procéder au remplissage à faible débit comme clairement explicité sur la figure 2. On passe ensuite à l'étape de dilution du produit chimique.

### 2) Mode dilution :

On procède à la mise en route de la pompe puis au recalibrage du 0 de l'analyseur du procédé. On ajoute ensuite une quantité fixe de produit chimique dans le récipient puis on procède à une mesure du titre de la solution ainsi réalisée après brassage de la solution grâce à la circulation dans la cuve à l'aide de l'éjecteur, de manière à obtenir une vingtaine de recirculations du produit. On se mettra toujours dans une situation dans laquelle il y a un excès de produit concentré à diluer. On procède ensuite à l'ajustement du titre de la solution par addition de petites quantités d'eau séquentiellement, eau désionisée provenant du récipient jusqu'à l'obtention du titre désiré, l'obtention de ce titre étant signalée par l'analyseur qui transmet sa venue à l'automate de contrôle. Ce dernier commande la fermeture des vannes.

On procède ensuite à la stabilisation du titre de la solution diluée, par exemple en procédant au brassage pendant environ 10 mn sous agitation. Ce brassage à l'aide de l'éjecteur tel que décrit sur la figure 1, peut consister en une recirculation quasiment complète du liquide sur lui-même au moins 3 fois par l'intermédiaire de l'éjecteur de manière à obtenir une bonne homogénéisation. La durée de cette homogénéisation ne sera pas supérieure, d'une manière générale, à la durée nécessaire à plus de 200 recirculations, de préférence de 10 à 50 recirculations du produit sur lui-même. L'optimum est généralement obtenu avec une recirculation du produit sur lui-même entre 10 et 20 fois. Après cette étape de stabilisation sous brassage, et si la mesure du titre indique une valeur qui est dans la tolérance souhaitée le produit est transféré dans la cuve de stockage (36) et lorsque celle-ci est pleine, si nécessaire un échantillon de cette solution diluée (37) est prélevé pour analyse globale de la composition de la solution par exemple par ICP-MS. Si au contraire le titre n'est pas dans la tolérance désirée, on rajoute de l'eau, si l'on est en excès, ou du produit concentré si l'on est en défaut et l'on continue l'ajustement, le brassage, etc...(retour à E.I. sur la figure).

## Revendications

1. Procédé de dilution de produit chimique ultrapur destiné à être utilisé dans la fabrication de micro circuits électroniques dans lequel on utilise un premier récipient (1) contenant ledit produit chimique sous forme concentrée (2) ayant une pureté prédéterminée P compatible avec la pureté requise dans l'industrie microélectronique au point d'utilisation de ce produit, une source d'eau ultra pure (14) de pureté au moins égale à P, un second récipient (7) pour mélanger le produit chimique concentré et l'eau ultra pure permettant d'obtenir une solution de produit dilué dont la pureté est au moins égale à P, l'ajustement du titre de la solution de produit dilué étant assuré par la mesure du titre de la solution diluée après le mélange d'une quantité prédéterminée d'eau ultra pure et de produit chimique concentré de pureté P, de manière à obtenir une concentration en produit chimique supérieure à la concentration finale voulue du produit chimique dilué, addition d'une quantité supplémentaire d'eau ultra pure au mélange, cette quantité supplémentaire étant au plus égale à la quantité théorique nécessaire pour obtenir le titre voulu, puis brassage de la solution diluée (37) pendant une durée telle que l'on obtienne au moins environ trois recirculations du produit dilué sur lui-même afin d'assurer une bonne homogénéisation du produit dilué (37) et un titre sensiblement constant dans tout le volume du produit dilué (37), le titre de la solution de produit dilué étant finalement contrôlé avant que le produit ne soit stocké dans un troisième récipient (36).

2. Procédé selon la revendication 1, **caractérisé en ce que** le titre de la solution dilué (37) est ajusté par ajout d'eau ultra pure ou de produit chimique concentré si celui-ci n'est pas dans la tolérance désirée après l'opération de brassage, un brassage de durée similaire au premier brassage étant à nouveau réalisé.

3. Procédé selon l'une des revendications 1 ou 2, **caractérisé en ce que** le brassage de la solution diluée est réalisé pendant une durée telle que l'on obtienne au plus environ deux cents recirculation du produit dilué.

4. Procédé selon l'une des revendications 1 à 3, **caractérisé en ce que** l'on brasse la solution diluée pendant une durée comprise entre 10 à 50 recirculations du produit dilué.

5. Procédé selon l'une des revendications 1 à 4, **caractérisé en ce que** l'on brasse la solution diluée pendant une durée comprise entre 10 à 20 recirculations du produit dilué.

6. Procédé selon l'une des revendications 1 à 5, **caractérisé en ce que** le brassage est réalisé dans le deuxième récipient.

7. Procédé selon l'un des revendications 1 à 6, **caractérisé en ce que** la dilution du produit concentré s'effectue dans une cuve fermée, brassée à l'aide d'un éjecteur.

8. Procédé selon l'une des revendications 1 à 7, **caractérisé en ce que** le dosage de la quantité d'eau ultra pure voulue est effectué par pesée ou toute autre méthode volumétrique.

9. Procédé selon l'une des revendications 1 à 8, **caractérisé en ce que** la mesure du titre de la solution est effectué sans contact physique avec l'échantillon de celle-ci.

10. Procédé selon l'une des revendications 1 à 9, **caractérisé en ce que** la mesure du titre de la solution de produit dilué s'effectue par mesure de la densité d'un échantillon du mélange, cet échantillon circulant dans une canalisation en circuit fermé sur le récipient où se trouve le produit dilué, cette mesure s'effectuant sans contact physique direct avec l'échantillon.

11. Procédé selon l'une des revendications 1 à 9, **caractérisé en ce que** cette mesure s'effectue par conductimétrie, sans contact physique direct avec l'échantillon.

12. Procédé selon l'une des revendications 1 à 9, **caractérisé en ce que** cette mesure s'effectue par mesure de la vitesse de transmission d'une onde sonore à travers l'échantillon sans contact physique avec celui-ci.

13. Procédé selon l'une des revendications 1 à 12, **caractérisé en ce que** la mesure du titre est effectuée par un système de mesure préalablement calibré avec de l'eau désionisée de pureté supérieure à P, avant chaque opération de dilution du produit concentré.

14. Appareil de dilution de produits chimiques ultrapurs **caractérisé en ce qu'**il comporte un premier récipient contenant ledit produit chimique sous forme concentrée et ayant une pureté P, une source d'eau ultrapure de pureté au moins égale à P, un second récipient pour mélanger le produit chimique concentré et l'eau ultra-pure et des moyens d'ajustement du titre de la résolution de produit dilué pour mettre en oeuvre le procédé selon l'une des revendications 1 à 13.

## Claims

1. Method for diluting an ultrapure chemical intended to be used in the fabrication of electronic microcircuits in which the following are used: a first tank (1) , containing the said chemical (2) in concentrated form having a predetermined purity P compatible with the purity required in the microelectronics industry at the point of use of this chemical; a source (14) of ultrapure water of purity at least equal to P; and a second tank (7) for mixing the concentrated chemical with the ultrapure water, making it possible to obtain a diluted chemical solution, the purity of which is at least equal to P, the titre of the diluted chemical solution being adjusted by measuring the titre of the diluted solution after the mixing of a predetermined amount of ultrapure water with the concentrated chemical of purity P, so as to obtain a chemical concentration greater than the desired final concentration of the diluted chemical, the addition of a further amount of ultrapure water to the mixture, this further amount being at most equal to the theoretical amount needed to obtain the desired titre, then the stirring of the diluted solution (37) for a time such that at least about three recirculations of the diluted chemical on itself are obtained so as to ensure that the diluted chemical (37) is properly homogeneous with a titre approximately constant throughout the volume of the diluted chemical (37), the titre of diluted chemical solution being finally checked before the chemical is stored in a third tank (36).

2. Method according to Claim 1, **characterized in that** the titre of the diluted solution (37) is adjusted by the addition of ultrapure water or of concentrated chemical if the latter is not within the desired tolerance after the stirring operation, a stirring operation of duration similar to the first stirring operation being again carried out.

3. Method according to either of Claims 1 and 2, **characterized in that** the diluted solution is stirred for a time such that at most about two hundred recirculations of the diluted product are obtained.

4. Method according to one of Claims 1 to 3, **characterized in that** the diluted solution is stirred for a time corresponding to between 10 and 50 recirculations of the diluted product.

5. Method according to one of Claims 1 to 4, **characterized in that** the diluted solution is stirred for a time corresponding to between 10 and 20 recirculations of the diluted product.

6. Method according to one of Claims. 1 to 5, **characterized in that** the stirring is carried out in the second tank.

7. Method according to one of Claims 1 to 6, **characterized in that** the diluting of the concentrated chemical takes place in a closed vessel stirred using an ejector.

8. Method according to one of Claims 1 to 7, **characterized in that** the desired amount of ultrapure water is metered by weighing or any other volumetric method.

9. Method according to one of Claims 1 to 8, **characterized in that** the titre of the solution is measured without any physical contact with the sample of the solution.

10. Method according to one of Claims 1 to 9, **characterized in that** the titre of diluted chemical solution is measured by measuring the density of a sample of the mixture, this sample flowing in a closed-circuit line back to the tank where the diluted product is, this measurement being performed without any direct physical contact with the sample.

11. Method according to one of Claims 1 to 9, **characterized in that** this measurement is performed by conductimetry, without any direct physical contact with the sample.

12. Method according to one of Claims 1 to 9, **characterized in that** this measurement is performed by measuring the speed of transmission of a sound wave through the sample without any physical contact with the latter.

13. Method according to one of Claims 1 to 12, **characterized in that** the titre is measured by a measurement device calibrated beforehand with deionized water of purity greater than P, before each operation of diluting the concentrated product.

14. System for diluting ultrapure chemicals, **characterized in that** it comprises a first tank, containing the said chemical in concentrated form and having a purity P, a source of ultrapure water of purity at least equal to P, a second tank, for mixing the concentrated chemical with the ultrapure water, and means for adjusting the titre of the diluted product solution in order to carry out the method according to one of Claims 1 to 13.

## Patentansprüche

1. Verfahren zum Verdünnen von ultrareinem chemischem Präparat für die Verwendung in der Herstellung von elektronischen Mikroschaltungen, verwendend einen ersten Behälter (1), der das chemische Präparat in konzentrierter Form (2) enthält, welches eine vorbestimmte Reinheit P aufweist, die mit der in der Mikroelektronik geforderten Verwendungsreinheit des Präparats kompatibel ist, eine ultrareine Wasserquelle (14), deren Reinheit mindestens gleich P ist, einen zweiten Behälter (7) zum Mischen des konzentrierten chemischen Präparats und des ultrareinen Wassers, um eine verdünnte Präparatlösung zu erhalten, deren Reinheit mindestens gleich P ist, wobei die Anpassung des Titers der verdünnten Präparatlösung sichergestellt ist durch das Messen des Titers der verdünnten Lösung nach dem Mischen einer vorbestimmten Menge ultrareinen Wassers und des konzentrierten chemischen Präparats mit der Reinheit P, um eine Konzentration in dem chemischen Präparat zu erhalten, die höher ist als die gewünschte endgültige Konzentration des verdünnten chemischen Präparats, Hinzufügen einer zusätzlichen Menge von ultrareinem Wasser zu der Mischung, wobei diese zusätzliche Menge mindestens gleich der Menge ist, die theoretisch erforderlich ist, um den gewünschten Titer zu erhalten, anschließendem Umrühren der verdünnten Lösung (37) während einer solchen Dauer, dass man mindestens ungefähr drei Umwälzungen des verdünnten Präparats um sich selbst erhält, um eine gute Homogenisierung des verdünnten Präparats (37) und einen deutlich konstanten Titer in dem gesamten Volumen des verdünnten Präparats (37) sicherzustellen, wobei der Titer der verdünnten Präparatlösung letztlich kontrolliert wird, bevor das Präparat in einem dritten Behälter (36) gelagert wird.

2. Verfahren nach Anspruch 1, **dadurch gekennzeichnet, dass** der Titer der verdünnten Flüssigkeit (37) angepasst ist durch Hinzufügen von ultrareinem Wasser oder konzentriertem chemischem Präparat, wenn dieser nach dem erneut ausgeführten Umrührvorgang, von ähnlicher Dauer wie das erste Umrühren, Oxidation nicht innerhalb der gewünschten Toleranz ist.

3. Verfahren nach einem der Ansprüche 1 oder 2, **dadurch gekennzeichnet, dass** das Umrühren der verdünnten Lösung während einer solchen Dauer ausgeführt ist, dass man mindestens zweihundert Umwälzungen des verdünnten Präparats erhält.

4. Verfahren nach einem der Ansprüche 1 bis 3, **dadurch gekennzeichnet, dass** man die verdünnte Lösung während einer Dauer umrührt, die zwischen 10 bis 50 Umwälzungen des verdünnten Präparats beträgt.

5. Verfahren nach einem der Ansprüche 1 bis 4, **dadurch gekennzeichnet, dass** man die verdünnte Lösung während einer Dauer umrührt, die zwischen 10 bis 20 Umwälzungen des verdünnten Präparats beträgt.

6. Verfahren nach einem der Ansprüche 1 bis 5, **dadurch gekennzeichnet, dass** das Umrühren in dem zweiten Behälter ausgeführt ist.

7. Verfahren nach einem der Ansprüche 1 bis 6, **dadurch gekennzeichnet, dass** das Verdünnen des konzentrierten Präparats in einer geschlossenen Wanne, umgerührt mit Hilfe einer Saugstrahlpumpe, ausgeführt ist.

8. Verfahren nach einem der Ansprüche 1 bis 7, **dadurch gekennzeichnet, dass** die Dosierung der gewünschten Menge von ultrareinem Wasser durch Wiegen oder irgendeine andere volumetrische Methode ausgeführt ist.

9. Verfahren nach einem der Ansprüche 1 bis 8, **dadurch gekennzeichnet, dass** das Messen des Titers der Lösung ohne physischen Kontakt mit deren Probe ausgeführt ist.

10. Verfahren nach einem der Ansprüche 1 bis 9, **dadurch gekennzeichnet, dass** das Messen des Titers der Lösung des verdünnten Präparats durch Messen der Dichte einer Probe des Gemischs ausgeführt ist, wobei diese Probe in einer Röhrenleitung mit geschlossenem Kreislauf auf dem Behälter erfolgt, in dem sich das verdünnte Präparat befindet, wobei dieses Messen ohne direkten physischen Kontakt mit der Probe ausgeführt ist.

11. Verfahren nach einem der Ansprüche 1 bis 9, **dadurch gekennzeichnet, dass** dieses Messen mittels Leitfähigkeitsmessung ohne direkten physischen Kontakt mit der Probe ausgeführt ist.

12. Verfahren nach einem der Ansprüche 1 bis 9, **dadurch gekennzeichnet, dass** dieses Messen durch Messen der Übertragungsgeschwindigkeit einer Schallwelle durch die Probe ohne physischen Kontakt mit dieser ausgeführt ist.

13. Verfahren nach einem der Ansprüche 1 bis 12, **dadurch gekennzeichnet, dass** das Messen des Titers ausgeführt ist durch ein Messsystem, das zuvor mit entionisiertem Wasser von einer Reinheit größer als P kalibriert ist, vor jeder Verdünnungsoperation des konzentrierten Präparats.

14. Gerät zum Verdünnen von ultrareinen chemischen Präparaten, **dadurch gekennzeichnet, dass** es einen ersten Behälter, der das chemische Präparat in konzentrierter Form und von einer Reinheit P enthält, eine Quelle von ultrareinem Wasser von einer Reinheit mindestens gleich P, einen zweiten Behälter zum Mischen des konzentrierten chemischen Präparats und des ultrareinen Wassers sowie Mittel zum Anpassen des Titers der verdünnten Präparatauflösung umfasst, um das Verfahren nach einem der Ansprüche 1 bis 13 zu verwirklichen.
